# EUROPEAN PATENT SPECIFICATION

(11) **EP 4 465 425 B1**
(45) Date of publication and mention of the grant of the patent: **06.05.2026**
(21) Application number: 23794232.1
(22) Date of filing: 15.08.2023
(51) Int. Cl.: H01M 50/209, H01M 50/264, H01M 10/6568

(54) **FULLY-SUBMERGED ENERGY STORAGE DEVICE**
VOLLSTÄNDIG EINGETAUCHTE ENERGIESPEICHERVORRICHTUNG
DISPOSITIF DE STOCKAGE D'ÉNERGIE ENTIÈREMENT IMMERGÉ

(30) Priority: 07.04.2023 CN 202310369670
(43) Date of publication of application: 20.11.2024
(73) Proprietor: CSG Power Generation (Guangdong) Energy Storage Technology Co., Ltd, Guangzhou, Guangdong 510635 (CN)
(72) Inventor: WANG, Zhiqiang, Guangzhou, Guangdong 51063 (CN); DONG, Chao, Guangzhou, Guangdong 51063 (CN); LIU, Bangjin, Guangzhou, Guangdong 51063 (CN); WANG, Sheng, Guangzhou, Guangdong 51063 (CN); WANG, Jin, Guangzhou, Guangdong 51063 (CN); XIAO, Di, Guangzhou, Guangdong 51063 (CN); CHEN, Man, Guangzhou, Guangdong 51063 (CN); PENG, Yumin, Guangzhou, Guangdong 51063 (CN); ZHOU, Yueli, Guangzhou, Guangdong 51063 (CN); PENG, Cheng, Guangzhou, Guangdong 51063 (CN); ZHANG, Min, Guangzhou, Guangdong 51063 (CN); WU, Bin, Guangzhou, Guangdong 51063 (CN); WANG, Linwei, Guangzhou, Guangdong 51063 (CN); LIN, Qihua, Guangzhou, Guangdong 51063 (CN); ZHENG, Xiaodong, Guangzhou, Guangdong 51063 (CN); WENG, Zheng, Guangzhou, Guangdong 51063 (CN); ZHAO, Saohuan, Guangzhou, Guangdong 51063 (CN); ZOU, Lunsen, Guangzhou, Guangdong 51063 (CN)
(74) Representative: Inchingalo, Simona
(86) International application number: PCT/CN2023/113056
(87) International publication number: WO 2024/207658

(56) References cited:
- CN-A- 111 816 951
- CN-A- 111 816 951
- CN-A- 116 487 796
- CN-U- 214 230 341
- CN-U- 214 230 341
- US-A1- 2023 035 232

## Description

### TECHNICAL FIELD

The present disclosure relates to the technical field of energy storage devices, and particularly to a fully immersed energy storage device.

### BACKGROUND

An energy storage device refers to an electrical energy storage device, such as a battery or battery pack, that stores electrical energy. It can store and output the electrical energy in the battery or battery pack. During the process of energy conversion, heat is generated, which may cause damage to the energy storage device. In addition, temperature changes will also affect the storage and output of electrical energy and directly affect the working life and efficiency of the battery or battery pack, resulting in a decrease in the energy storage efficiency of the battery pack due to frequent charging and discharging during long-term use, which in turn causes a gradual decrease in the subsequent energy storage capacity of the battery pack. A fully immersed energy storage device is known from CN111816951A.

### SUMMARY

In view of this, the embodiments of the present disclosure provide a fully immersed energy storage device according to the features of claim 1.

In some embodiments, one end of the water pump is fixedly equipped with a water inlet pipe, a diverter is fixedly mounted inside the energy storage device casing, and the water inlet pipe passes through the energy storage device casing and is fixedly assembled with the diverter.

In some embodiments, a second motor is fixedly mounted inside the diverter, an output end of the second motor is fixedly connected with a screw rod, and the screw rod is movably equipped with a movable cover. The screw rod and the movable cover are engaged in a threaded manner, such that when the second motor is started to drive the screw rod to rotate, the movable cover is moved up and down along the screw rod.

In some embodiments, one end of a first diverter pipe is fixedly connected to the diverter, the other end of the first diverter pipe is fixedly equipped with a condensation plate, and condensation pipes are fixedly mounted inside the condensation plate.

In some embodiments, the condensation plate is fixedly equipped with a return pipe, and the return pipe is fixedly connected with a collector.

In some embodiments, one end of a second diverter pipe is fixedly connected with the diverter, and the other end of the second diverter pipe is fixedly connected with the collector.

In another aspect, the embodiments of the present disclosure also provide a method for controlling a fully immersed energy storage device, which is configured to the above-mentioned fully immersed energy storage device according to the features of claim 9.

In some embodiments, the method further includes:

In response to a sixth control signal, the water pump is started to discharge the water in the fully submerged energy storage device through the water outlet pipe.

In some embodiments, the fully immersed energy storage device also includes three additional gears. Starting the first motor in response to the first control signal to drive the gear to rotate, which in turn drives the annular rack to rotate includes:

in response to the first control signal, starting the first motor to drive the gear to rotate, which in turn drives the annular rack to rotate, wherein when the annular rack rotates, the three additional gears are driven to rotate simultaneously.

In another aspect, the embodiments of the present disclosure also provide an electronic device, including a processor and a memory.

The memory is configured to store programs.

The processor executes the program to perform the above method.

In another aspect, the embodiments of the present disclosure also provide a non-transitory computer-readable storage medium. The storage medium stores a program, and the program is executed by a processor to implement the above method.

Some embodiments of the present disclosure also provide a computer program product or computer program. The computer program product or computer program includes computer instructions, and the computer instructions are stored in a computer-readable storage medium. The processor of the computer device can read the computer instructions from the computer-readable storage medium, and the processor executes the computer instructions, so that the computer device performs the above method.

### BRIEF DESCRIPTION OF THE DRAWINGS

In order to illustrate the technical solutions of the embodiments of the present disclosure more clear, a brief introduction will be made to the accompanying drawings that are required for describing the embodiments. It is apparent that the accompanying drawings are only some embodiments of the present disclosure. For those of ordinary skill in the art, other drawings can be obtained from these drawings without creative efforts.
FIG. 1 is a schematic front view of a structure of a fully immersed energy storage device in the present disclosure;
FIG. 2 is a schematic diagram showing a structure at location A in FIG. 1;
FIG. 3 is a schematic rear view of a structure of the fully immersed energy storage device in the present disclosure;
FIG. 4 is a schematic cross-sectional structural diagram of the front part of the fully immersed energy storage device in the present disclosure;
FIG. 5 is a schematic diagram showing a structure at location B in FIG. 4;
FIG. 6 is a schematic cross-sectional structural diagram of a side part of the fully immersed energy storage device in the present disclosure;
FIG. 7 is a schematic diagram showing a structure at location C in FIG. 6;
FIG. 8 is a schematic top view of a structure of the fully immersed energy storage device in the present disclosure.

### DETAILED DESCRIPTION OF THE EMBODIMENTS

In order to make the purpose, technical solutions, and advantages of the present disclosure more clear, the present disclosure will be illustrated in detail below in conjunction with the accompanying drawings and embodiments. It should be understood that the specific embodiments described herein are only used to explain the present disclosure and are not intended to limit the present disclosure.

### Embodiment I

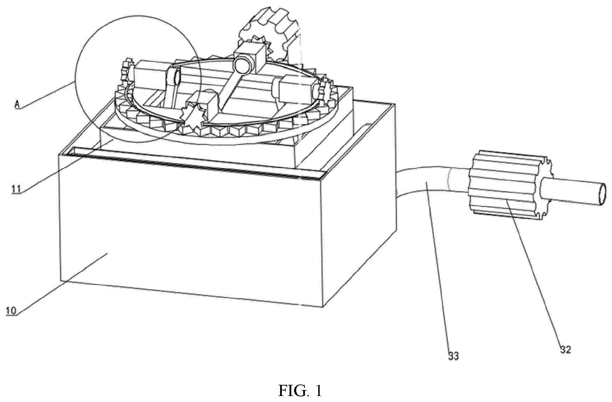

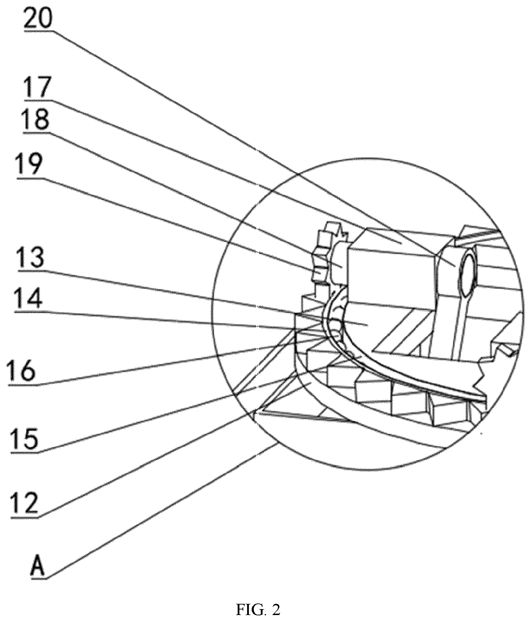

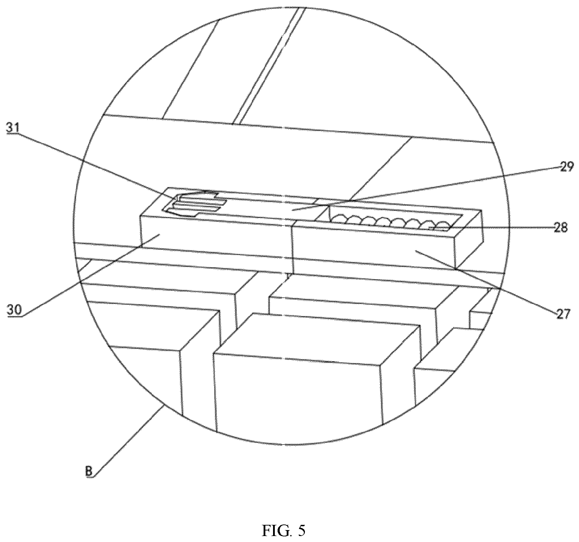

FIGS. 1-5 are schematic structural diagrams of a fully immersed energy storage device according to an embodiment of the present disclosure. The fully immersed energy storage device in this embodiment includes an energy storage device casing 10 and a water pump 32. An insulation box 11 is fixedly mounted inside the energy storage device casing 10. An assembly plate 12 is fixedly mounted on the insulation box 11. A mounting platform 13 is fixedly mounted on the assembly plate 12. An annular rack 14 is movably mounted on the assembly plate 12. The annular rack 14 surrounds the mounting platform 13, thus a rotating groove 15 is formed between the mounting platform 13 and the annular rack 14. Balls 16 are movably placed inside the rotating groove 15. An assembly block 17 is fixedly mounted on the mounting platform 13. A rotating shaft 18 is movably mounted on the assembly block 17. One end of the rotating shaft 18 is fixedly provided with a gear 19. The gear 19 and the annular rack 14 are assembled through tooth meshing. The other end of the rotating shaft 18 is movably connected with one end of a first assembly rod 20. The other end of the first assembly rod 20 is movably connected with one end of a second assembly rod 23. The other end of the second assembly rod 23 is movably connected with a fixed block 24. The fixed block 24 is fixedly connected with an energy storage box 25. An energy storage battery pack 26 is provided inside the energy storage box 25. A spring slot 27 is fixedly provided on the energy storage box 25. A spring 28 is fixedly received in the spring slot 27 with one end thereof connected to the spring slot 27. The other end of the spring 28 is fixedly connected to a buckle 29. A buckle block 30 is fixedly mounted on the energy storage box 25. A buckle slot 31 is defined in the buckle block 30, and the buckle 29 is received in the buckle slot 31. A motor base 21 is fixedly mounted on the energy storage device casing 10. The first motor 22 is fixedly mounted on the motor base 21. The output end of the first motor 22 is fixedly assembled with the gear 19.

A method for controlling the fully immersed energy storage device includes the following steps S1-S3.

In S1, the first motor 22 is started to drive the gear 19 to rotate, and the annular rack 14 is driven to rotate through the cooperation of the gear 19 and the annular rack 14 and under the action of the balls 16, which in turn drives three additional gears 19 to move at the same time.

In this embodiment, the device further includes three additional gears, each of which also engages with the annular rack 14 through tooth meshing and is connected to one rotating shaft 18. In other words, there are four gears in total, and one of the four gears is driven by the first motor. It should be understood that the number of gears is not limited.

In S2, the rotation of each gear 19 drives corresponding the first assembly rod 20 to move via the corresponding rotating shaft 18, and the relative movements of the first assembly rods 20 and the second assembly rods simultaneously act on the four sides of the energy storage box 25, causing the energy storage box 25 to move up and down.

In S3, the buckle 29 is pressed, and the energy storage box 25 is opened or closed under the action of the spring 28.

The working principle is as follows. The first motor 22 is started, and the rotation of the gear 19 engaged with the first motor 22 drives the annular rack 14 to rotate. With the action of the balls 16, the three additional gears 19 can rotate at the same time, thus the first assembly rods 20 are driven to rotate through the connected rotating shafts 18. The cooperation of the first assembly rods 20 and the second assembly rods 23 can make the energy storage box 25 move up and down, such that the energy storage box 25 can be completely immersed in the coolant in the insulation box 11, and the energy storage box 25 can also be moved out of the insulation box 11 so that the energy storage battery pack 26 can be repaired and replaced. Installing multiple energy storage battery packs 26 in the energy storage box 25 can increase the capacity of the energy storage device, so that it can supply energy for a long time. The insulation box 11 is filled with coolant, which is a non-conductive oil, ensuring that the energy storage box 25 is in a stable temperature state.

### Embodiment 2

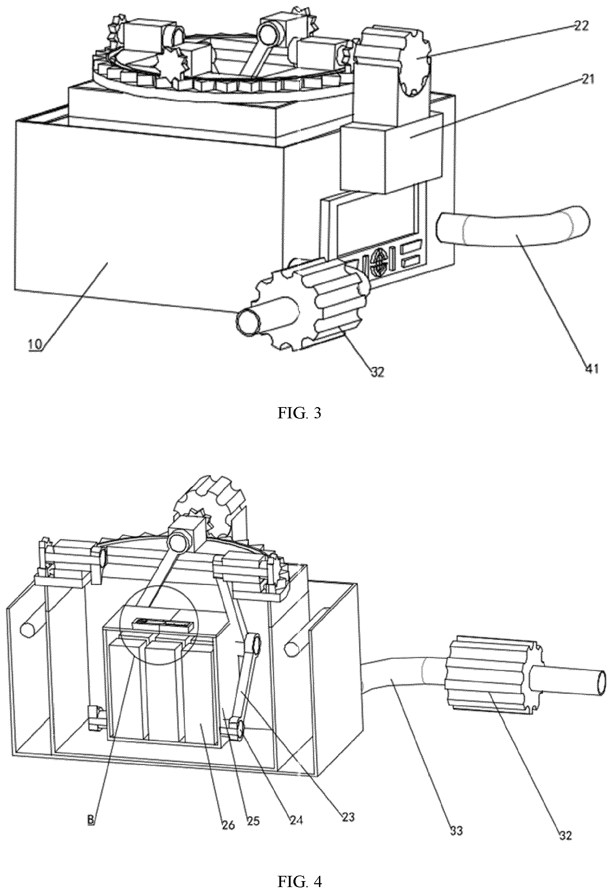

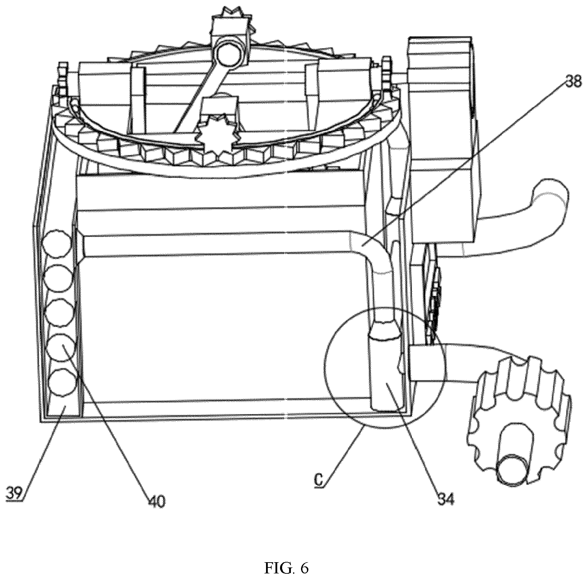

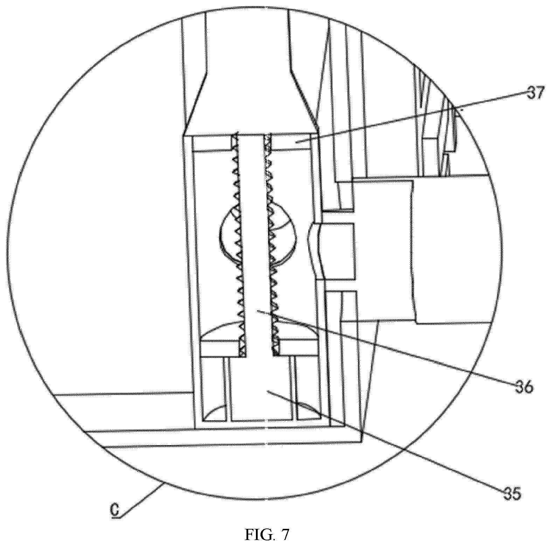

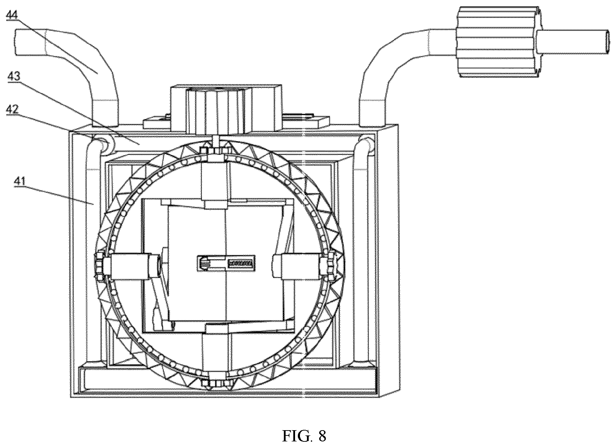

FIGS. 4-8 are schematic structural diagrams of a fully immersed energy storage device according to another embodiment of the present disclosure. Coolant can keep the device at a stable temperature, but for the device that continuously generates heat, it is necessary to dissipate the heat from the energy storage device in time. In order to effectively take away the heat in the energy storage device, one end of the water pump 32 is fixedly equipped with a water inlet pipe 33. A diverter 34 is fixedly mounted inside the energy storage device casing 10. The water inlet pipe 33 passes through the energy storage device casing 10 and is fixedly assembled with the diverter 34. A second motor 35 is fixedly mounted inside the diverter 34. The output end of the second motor 35 is fixedly connected with one end of a screw rod 36. The screw rod 36 is movably equipped with a movable cover 37. The screw rod 36 and the movable cover 37 are engaged in a threaded manner, such that when the second motor 35 is started to drive the screw rod 36 to rotate, the movable cover is moved up and down along the screw rod 36. The diverter 34 is fixedly connected with one end of a first diverter pipe 38. The other end of the first diverter pipe 38 is fixedly equipped with a condensation plate 39. Condensation pipes 40 are fixedly installed inside the condensation plate 39. The condensation plate 39 is fixedly equipped with a return pipe 41. The return pipe 41 is fixedly connected with a collector 42. The diverter 34 is fixedly connected with one end of a second diverter pipe 43. The other end of the second diverter pipe 43 is fixedly connected with the collector 42. The collector 42 is fixedly connected with a water outlet pipe 44, which passes through the energy storage device casing 10.

A method for controlling a fully immersed energy storage device includes the following steps S4-S7.

In S4, the water pump 32 is started to allow water to enter the device through the water inlet pipe 33.

In S5, when the temperature in the energy storage device is greater than a first temperature threshold, the second motor 35 is started to drive the screw rod 36 to rotate in a first direction, and the movable cover 37 is moved to the top of the second motor 35 through the threaded engagement between the screw rod 36 and the movable cover 37.

In S6, when the temperature is greater than a second temperature threshold, the second motor 35 is started to drive the screw rod 36 to rotate in a second direction, and the movable cover 37 is moved to the bottom of the second motor 35 through the threaded engagement between the screw rod 36 and the movable cover 37. The second temperature threshold is greater than the first temperature threshold.

In S7, the water pump 32 pumps the cooling water into the energy storage device through the water inlet pipe 33 and then discharges the cooling water through the water outlet pipe 44, thereby taking away the heat in the device.

The working principle is as follows. The water pump 32 is started to pump water into the second motor 35 through the water inlet pipe 33. When the temperature is slightly high, the second motor 35 is started to drive the screw rod 36 to rotate in the first direction, so that the movable cover 37 is moved to the top of the second motor 35. At this time, the cooling water will be injected into the collector 42 through the second diverter pipe 43 and then discharged through the water outlet pipe 44. When the temperature rises significantly, the second motor 35 is started to drive the screw rod 36 to rotate in the second direction to move the movable cover 37 to the bottom of the second motor 35. At this time, the cooling water will flow out through the first diverter pipe 38 and the second diverter pipe 43 respectively. The cooling water flowing out from the second diverter pipe 43 will be injected into the collector 42. The cooling water flowing out from the first diverter pipe 38 will enter the plurality of condensation pipes 40 inside the condensation plate 39, thereby effectively cooling the energy storage device. Then it is injected into the collector 42 through the return pipe 41, and the cooling water in the collector 42 is then discharged through the water outlet pipe 44.

In some alternative embodiments, the functions/operations mentioned in the above methods may be carried out in a different order than the order mentioned in the description of the steps. For example, depending on the functions/operations involved, two steps shown in succession may in fact be executed substantially simultaneously or the steps may sometimes be executed in the reverse order. Furthermore, the embodiments presented and described in the methods of the present disclosure are provided by way of examples to provide a more comprehensive understanding of the technology. The disclosed methods are not limited to the operations and logical flows presented herein. Alternative embodiments are foreseeable in which the order of various operations is changed and in which sub-operations described as part of a larger operation are performed independently.

Furthermore, although the present disclosure has been described in the context of functional modules, it will be understood that, unless stated to the contrary, one or more of the described functions and/or features can be integrated in a single physical device and/or software module, or one or more functions and/or features may be implemented in separate physical devices or software modules. It will also be understood that a detailed discussion regarding the actual implementation of each module is unnecessary for understanding the disclosure. More specifically, considering the properties, functions, and internal relationships of various functional modules of the device in the present disclosure, those skilled in the art will understand the actual implementation of the modules within their ordinary technical knowledge. Therefore, a person skilled in the art can implement the present disclosure set forth in the claims without undue experimentation using ordinary techniques. It should also be understood that the specific concepts disclosed are merely illustrative and are not intended to limit the scope of the present disclosure, which is determined by the entirety of the attached claims.

If the functions of the control methods are implemented in the form of software functional units and sold or used as independent products, they can be stored in a non-transitory computer-readable storage medium. Based on this understanding, the technical solution of the control methods of the present disclosure essentially or the part that contributes to the existing technology or the part of the technical solution can be embodied in the form of a software product. The computer software product is stored in a storage medium and includes several instructions configured to cause a computer device (which may be a personal computer, a server, or a network device, etc.) to execute all or part of the steps of the methods described in various embodiments of the present disclosure. The aforementioned storage medium includes USB flash disk, mobile hard disk, read-only memory (ROM), random access memory (RAM), magnetic disk, optical disk, or other medium that can store program code.

The logic and/or steps represented herein, for example, may be considered as a sequenced list of executable instructions used to implement logical functions, which can be specifically implemented in any computer-readable medium for use by instruction execution systems, devices, or equipment (such as a computer-based system, a system including a processor, or other system that can obtain instructions from an instruction execution system, device, or equipment and execute the instructions), or can be used in combination with these instruction execution systems, devices, or equipment. For this specification, a "computer-readable medium" may be any device that can contain, store, communicate, propagate, or transport a program for use by or in connection with an instruction execution system, apparatus, or device.

More specific examples (non-exhaustive list) of the computer-readable medium include: electrical connection (electronic device) with one or more wires, portable computer disk cartridge (magnetic device), random access memory (RAM), read-only memory (ROM), erasable and programmable read-only memory (EPROM) or flash memory, fiber optic devices, and portable compact disc read-only memory (CDROM). Additionally, the computer-readable medium may even be paper or other suitable medium on which the program may be printed, as the program can be obtain electronically by, for example, optically scanning the paper or other medium, followed by editing, interpreting, or processing in other suitable ways when necessary, and then being stored in a computer memory.

It should be understood that various parts of the present disclosure can be implemented using hardware, software, firmware, or a combination thereof. In the above embodiments, various steps or methods can be implemented using software or firmware stored in a memory and executed by a suitable instruction execution system. For example, if it is implemented using hardware, as in another embodiment, it can be implemented by any one or a combination of the following technologies known in the art: discrete logic circuits with logic gate circuits for implementing logical functions on data signals, application-specific integrated circuits with suitable combinational logic gate circuits, programmable gate array (PGA), field programmable gate array (FPGA), etc.

In the description of this specification, reference to the terms "an embodiment", "some embodiments", "examples", "specific examples", or "some examples" and the like means that specific features, structures, materials, or characteristics that are described in conjunction with that embodiment or example are included in at least one embodiment or example of the present disclosure. In this specification, schematic representations of the above terms do not necessarily refer to the same embodiment or example. Furthermore, the specific features, structures, materials, or characteristics described may be combined in any suitable manner in any one or more embodiments or examples.

## Claims

1. A fully immersed energy storage device, comprising an energy storage device casing (10) and a water pump (32);
wherein, an insulation box (11) is fixedly mounted inside the energy storage device casing (10), an assembly plate (12) is fixedly mounted on the insulation box (11), a mounting platform (13) is fixedly mounted on the assembly plate (12), an annular rack (14) is movably mounted on the assembly plate (12) and surrounds the mounting platform (13), a rotating groove (15) is formed between the mounting platform (13) and the annular rack (14), balls (16) are movably placed in the rotating groove (15), an assembly block (17) is fixedly mounted on the mounting platform (13), a rotating shaft (18) is movably mounted on the assembly block (17), one end of the rotating shaft is(18) is fixedly provided with a gear (19), the gear (19) and the annular rack (14) are assembled through tooth meshing, the other end of the rotating shaft (18) is movably connected with one end of a first assembly rod (20), the other end of the first assembly rod (20) is movably connected with one end of a second assembly rod (23), the other end of the second assembly rod (23) is movably connected with a fixed block (24), the fixed block (24) is movably connected with an energy storage box (25), an energy storage battery pack (26) is mounted inside the energy storage box (25), a spring slot (27) is fixedly provided on the energy storage box (25), a spring (28) is fixedly received in the spring slot (27), the other end of the spring (28) is fixedly connected to a buckle (29), a buckle block (30)is fixedly mounted on the energy storage box (25), a buckle slot (31) is defined in the buckle block (30), the buckle (29) is received in the buckle slot (31), a motor base (21) is fixedly mounted on the energy storage device casing (10), a first motor (22) is fixedly mounted on the motor base (21), and an output end of the first motor (22) is fixedly assembled with the gear (19), such that the first motor (22) is capable of driving the gear (19) to rotate, which in turn drives the first assembly rod (20) to move through the rotating shaft (18), such that relative movement of the first assembly rod (20) and the second assembly rod (23) drives the energy storage box (25) to move up and down.

2. The fully immersed energy storage device according to claim 1, wherein one end of the water pump (32) is fixedly equipped with a water inlet pipe (33), a diverter (34) is fixedly mounted inside the energy storage device casing (10), and the water inlet pipe (33) passes through the energy storage device casing (10) and is fixedly assembled with the diverter (34).

3. The fully immersed energy storage device according to claim 2, wherein a second motor (35) is fixedly mounted inside the diverter (34), an output end of the second motor (35) is fixedly connected with a screw rod (36), and the screw rod (36) is movably equipped with a movable cover (37),
wherein the screw rod (36) and the movable cover (37) are engaged in a threaded manner, such that when the second motor (35) is started to drive the screw rod (36) to rotate, the movable cover (37) is moved up and down along the screw rod (36).

4. The fully immersed energy storage device according to claim 3, wherein one end of a first diverter pipe (38) is fixedly connected to the diverter (34), the other end of the first diverter pipe (38) is fixedly equipped with a condensation plate (39), and condensation pipes (40) are fixedly mounted inside the condensation plate (39).

5. The fully immersed energy storage device according to claim 4, wherein the condensation plate (39) is fixedly equipped with a return pipe (41), and the return pipe (41) is fixedly connected with a collector (42).

6. The fully immersed energy storage device according to claim 5, wherein one end of a second diverter pipe (43) is fixedly connected with the diverter (34), and the other end of the second diverter pipe (43) is fixedly connected with the collector (42).

7. The fully immersed energy storage device according to claim 6, wherein the collector (42) is fixedly connected with a water outlet pipe (44), and the water outlet pipe (44) passes through the energy storage device casing (10).

8. The fully immersed energy storage device according to claim 7, further comprising three additional gears, each of which engages with the annular rack (14) through tooth meshing and is connected to one rotating shaft.

9. A method for controlling a fully immersed energy storage device, which is configured to control a fully immersed energy storage device according to any one of claims 3 to 7, and the method comprises:
in response to a first control signal, starting the first motor (22) to drive the gear (19) to rotate, which in turn drives the annular rack (14) to rotate; wherein a rotation of the gear (19) drives the first assembly rod (20) to move via the rotating shaft (18), the first assembly rod (20) moves and forms relative motion with the second assembly rod (23), causing the energy storage box (25) to move up and down;
in response to a second control signal, pressing the buckle (29) to cooperate with the spring (28) to open or close the energy storage box (25);
in response to a third control signal, starting the water pump (32) to introduce water into the fully immersed energy storage device through the water inlet pipe (33);
when a temperature is greater than a first temperature threshold, in response to a fourth control signal, starting the second motor (35) to drive the screw rod (36) to rotate; wherein when the screw rod (36) rotates, the movable cover (37) is moved to a top of the second motor (35) through a threaded engagement between the screw rod (36) and the movable cover (37);
when the temperature is greater than a second temperature threshold, in response to a fifth control signal, starting the second motor (35) to drive the screw rod (36) to rotate; wherein when the screw rod (36) rotates, the movable cover (37) is moved to a bottom of the second motor (35) through the threaded engagement between the screw rod (36) and the movable cover (37); and the second temperature threshold is greater than the first temperature threshold.

10. The method for controlling a fully immersed energy storage device according to claim 9, wherein the method further comprises:
in response to a sixth control signal, starting the water pump (32) to discharge water in the fully immersed energy storage device through the water outlet pipe (44).

11. The method for controlling a fully immersed energy storage device according to claim 9, wherein the fully immersed energy storage device further comprises three additional gears (19); and
the starting the first motor (22) in response to the first control signal to drive the gear (19) to rotate, which in turn drives the annular rack (14) to rotate, comprises:
in response to the first control signal, starting the first motor (22) to drive the gear (19) to rotate, which in turn drives the annular rack (14) to rotate, wherein when the annular rack (14) rotates, the three additional gears (19) are driven to rotate simultaneously.

## Patentansprüche

1. Vollständig eingetauchte Energiespeichervorrichtung, umfassend ein Energiespeichervorrichtungsgehäuse (10) und einer Wasserpumpe (32);
wobei ein Isolierkasten (11) fest innerhalb des Energiespeichervorrichtungsgehäuses (10) montiert ist, eine Zusammenbauplatte (12) fest an dem Isolierkasten (11) montiert ist, eine Montageplattform (13) fest an der Zusammenbauplatte (12) montiert ist, eine ringförmige Zahnstange (14) beweglich an der Zusammenbauplatte (12) montiert ist und die Montageplattform (13) umgibt, eine Drehnut (15) zwischen der Montageplattform (13) und der ringförmigen Zahnstange (14) gebildet ist, Kugeln (16) beweglich in der Drehnut (15) platziert sind, ein Zusammenbaublock (17) fest auf der Montageplattform (13) montiert ist, eine Drehwelle (18) beweglich auf dem Zusammenbaublock (17) montiert ist, ein Ende der Drehwelle (18) fest mit einem Zahnrad (19) versehen ist, das Zahnrad (19) und die ringförmige Zahnstange (14) durch Ineinandergreifen der Zähne zusammengebaut sind, das andere Ende der Drehwelle (18) beweglich mit einem Ende einer ersten Zusammenbaustange (20) verbunden ist, das andere Ende der ersten Zusammenbaustange (20) beweglich mit einem Ende einer zweiten Zusammenbaustange (23) verbunden ist, das andere Ende der zweiten Zusammenbaustange (23) beweglich mit einem festen Block (24) verbunden ist, der feste Block (24) beweglich mit einem Energiespeicherkasten (25) verbunden ist, ein Energiespeicherbatteriepack (26) innerhalb des Energiespeicherkastens (25) montiert ist, ein Federschlitz (27) fest am Energiespeicherkasten (25) vorgesehen ist, eine Feder (28) fest im Federschlitz (27) aufgenommen ist, das andere Ende der Feder (28) fest mit einer Schnalle (29) verbunden ist, ein Schnallenblock (30) fest am Energiespeicherkasten (25) montiert ist, ein Schnallenschlitz (31) im Schnallenblock (30) definiert ist, die Schnalle (29) im Schnallenschlitz (31) aufgenommen ist, eine Motorsockel (21) fest an dem Energiespeichervorrichtungsgehäuse (10) montiert ist, ein erster Motor (22) fest an dem Motorsockel (21) montiert ist und ein Abtriebsende des ersten Motors (22) fest mit dem Zahnrad (19) zusammengebaut ist, so dass der erste Motor (22) in der Lage ist, das Zahnrad (19) zur Drehung anzutreiben, was wiederum die erste Zusammenbaustange (20) antreibt, um sich durch die Drehwelle (18) zu bewegen, so dass eine Relativbewegung der ersten Zusammenbaustange (20) und der zweiten Zusammenbaustange (23) den Energiespeicherkasten (25) antreibt, um sich auf und ab zu bewegen.

2. Vollständig eingetauchte Energiespeichervorrichtung nach Anspruch 1, wobei ein Ende der Wasserpumpe (32) fest mit einer Wassereinlassleitung (33) ausgestattet ist, ein Ablenker (34) fest innerhalb des Energiespeichervorrichtungsgehäuses (10) montiert ist und die Wassereinlassleitung (33) durch das Energiespeichervorrichtungsgehäuse (10) verläuft und fest mit dem Ablenker (34) zusammengebaut ist.

3. Vollständig eingetauchte Energiespeichervorrichtung nach Anspruch 2, wobei ein zweiter Motor (35) fest im Ablenker (34) montiert ist, ein Ausgangsende des zweiten Motors (35) fest mit einer Schraubenstange (36) verbunden ist und die Schraubenstange (36) beweglich mit einer beweglichen Abdeckung (37) ausgestattet ist, wobei die Schraubenstange (36) und die bewegliche Abdeckung (37) in gewindeartigem Eingriff stehen, so dass, wenn der zweite Motor (35) gestartet wird, um die Schraubenstange (36) zur Drehung anzutreiben, die bewegliche Abdeckung (37) entlang der Schraubenstange (36) auf und ab bewegt wird.

4. Vollständig eingetauchte Energiespeichervorrichtung nach Anspruch 3, wobei ein Ende einer ersten Ablenkerleitung (38) fest mit dem Ablenker (34) verbunden ist, das andere Ende der ersten Ablenkerleitung (38) fest mit einer Kondensationsplatte (39) ausgestattet ist und Kondensationsleitungen (40) fest innerhalb der Kondensationsplatte (39) montiert sind.

5. Vollständig eingetauchte Energiespeichervorrichtung nach Anspruch 4, wobei die Kondensationsplatte (39) fest mit einer Rücklaufleitung (41) ausgestattet ist und die Rücklaufleitung (41) fest mit einem Kollektor (42) verbunden ist.

6. Vollständig eingetauchte Energiespeichervorrichtung nach Anspruch 5, wobei ein Ende einer zweiten Ablenkerleitung (43) fest mit dem Ablenker (34) verbunden ist und das andere Ende der zweiten Ablenkerleitung (43) fest mit dem Kollektor (42) verbunden ist.

7. Vollständig eingetauchte Energiespeichervorrichtung nach Anspruch 6, wobei der Kollektor (42) fest mit einer Wasserauslassleitung (44) verbunden ist und die Wasserauslassleitung (44) durch das Energiespeichervorrichtungsgehäuse (10) verläuft.

8. Vollständig eingetauchte Energiespeichervorrichtung nach Anspruch 7, ferner umfassend
drei weitere Zahnräder, die jeweils durch Ineinandergreifen der Zähne mit der ringförmigen Zahnstange (14) in Eingriff treten und mit einer Drehwelle verbunden sind.

9. Verfahren zum Steuern einer vollständig eingetauchten Energiespeichervorrichtung, das ausgelegt ist, um eine vollständig eingetauchte Energiespeichervorrichtung nach einem der Ansprüche 3 bis 7 zu steuern, und das Verfahren umfasst:
als Reaktion auf ein erstes Steuersignal, Starten des ersten Motors (22), um das Zahnrad (19) zur Drehung anzutreiben, das wiederum die ringförmige Zahnstange (14) zur Drehung antreibt; wobei eine Drehung des Zahnrads (19) die erste Zusammenbaustange (20) antreibt, um sich über die Drehwelle (18) zu bewegen, sich die erste Zusammenbaustange (20) bewegt und eine Relativbewegung mit der zweiten Zusammenbaustange (23) bildet, was bewirkt, dass sich der Energiespeicherkasten (25) auf und ab bewegt;
als Reaktion auf ein zweites Steuersignal, Drücken der Schnalle (29), damit sie mit der Feder (28) zusammenwirkt, um den Energiespeicherkasten (25) zu öffnen oder zu schließen;
als Reaktion auf ein drittes Steuersignal, Starten der Wasserpumpe (32), um Wasser durch die Wassereinlassleitung (33) in die vollständig eingetauchte Energiespeichervorrichtung einzuleiten;
wenn eine Temperatur größer als ein erster Temperaturschwellenwert ist, als Reaktion auf ein viertes Steuersignal, Starten des zweiten Motors (35), um die Schraubenstange (36) zur Drehung anzutreiben;
wobei, wenn sich die Schraubenstange (36) dreht, die bewegliche Abdeckung (37) durch einen Gewindeeingriff zwischen der Schraubenstange (36) und der beweglichen Abdeckung (37) zu einer Oberseite des zweiten Motors (35) bewegt wird;
wenn die Temperatur größer als ein zweiter Temperaturschwellenwert ist, als Reaktion auf ein fünftes Steuersignal, Starten des zweiten Motors (35), um die Schraubenstange (36) zur Drehung anzutreiben;
wobei, wenn sich die Schraubenstange (36) dreht, die bewegliche Abdeckung (37) durch den Gewindeeingriff zwischen der Schraubenstange (36) und der beweglichen Abdeckung (37) zu einer Unterseite des zweiten Motors (35) bewegt wird; und der zweite Temperaturschwellenwert ist größer als der erste Temperaturschwellenwert.

10. Verfahren zum Steuern einer vollständig eingetauchten Energiespeichervorrichtung nach Anspruch 9, wobei das Verfahren ferner Folgendes umfasst:
als Reaktion auf ein sechstes Steuersignal, Starten der Wasserpumpe (32), um Wasser in der vollständig eingetauchten Energiespeichervorrichtung durch die Wasserauslassleitung (44) abzulassen.

11. Verfahren zum Steuern einer vollständig eingetauchten Energiespeichervorrichtung nach Anspruch 9, wobei die vollständig eingetauchte Energiespeichervorrichtung ferner drei zusätzliche Zahnräder (19) umfasst; und
das Starten des ersten Motors (22) als Reaktion auf das erste Steuersignal, um das Zahnrad (19) zur Drehung anzutreiben, das wiederum die ringförmige Zahnstange (14) zur Drehen antreibt, umfasst:
als Reaktion auf das erste Steuersignal, Starten des ersten Motors (22), um das Zahnrad (19) zur Drehung anzutreiben, das wiederum die ringförmige Zahnstange (14) zur Drehung antreibt, wobei, wenn sich die ringförmige Zahnstange (14) dreht, die drei zusätzlichen Zahnräder (19) gleichzeitig zur Drehung angetrieben werden.

## Revendications

1. Dispositif de stockage d'énergie entièrement immergé, comprenant un boîtier (10) de dispositif de stockage d'énergie et une pompe à eau (32) ;
dans lequel un boîtier d'isolation (11) est monté de manière fixe à l'intérieur du boîtier (10) de dispositif de stockage d'énergie, une plaque d'assemblage (12) est montée de manière fixe sur le boîtier d'isolation (11), une plateforme de montage (13) est montée de manière fixe sur la plaque d'assemblage (12), une crémaillère annulaire (14) est montée de manière mobile sur la plaque d'assemblage (12) et entoure la plateforme de montage (13), une rainure rotative (15) est formée entre la plateforme de montage (13) et la crémaillère annulaire (14), des billes (16) sont placées de manière mobile dans la rainure rotative (15), un bloc d'assemblage (17) est monté de manière fixe sur la plateforme de montage (13), un arbre rotatif (18) est monté de manière mobile sur le bloc d'assemblage (17), une extrémité de l'arbre rotatif (18) est pourvue de manière fixe d'un engrenage (19), l'engrenage (19) et la crémaillère annulaire (14) sont assemblés par engrènement de dents, l'autre extrémité de l'arbre rotatif (18) est reliée de manière mobile à une extrémité d'une première tige d'assemblage (20), l'autre extrémité de la première tige d'assemblage (20) est reliée de manière mobile à une extrémité d'une seconde tige d'assemblage (23), l'autre extrémité de la seconde tige d'assemblage (23) est reliée de manière mobile à un bloc fixe (24), le bloc fixe (24) est relié de manière mobile à un boîtier (25) de stockage d'énergie, un bloc-batterie (26) de stockage d'énergie est monté à l'intérieur du boîtier (25) de stockage d'énergie, une fente de ressort (27) est prévue de manière fixe sur le boîtier (25) de stockage d'énergie, un ressort (28) est reçu de manière fixe dans la fente de ressort (27), l'autre extrémité du ressort (28) est reliée de manière fixe à une boucle (29), un bloc de boucle (30) est monté de manière fixe sur le boîtier (25) de stockage d'énergie, une fente de boucle (31) est définie dans le bloc de boucle (30), la boucle (29) est reçue dans la fente de boucle (31), une base de moteur (21) est montée de manière fixe sur le boîtier (10) de dispositif de stockage d'énergie, un premier moteur (22) est monté de manière fixe sur la base de moteur (21), et une extrémité de sortie du premier moteur (22) est assemblée de manière fixe avec l'engrenage (19), de telle sorte que le premier moteur (22) est capable d'entraîner l'engrenage (19) en rotation, ce qui entraîne à son tour la première tige d'assemblage (20) à se déplacer à travers l'arbre rotatif (18), de telle sorte que le mouvement relatif de la première tige d'assemblage (20) et de la seconde tige d'assemblage (23) entraîne le boîtier (25) de stockage d'énergie à se déplacer vers le haut et vers le bas.

2. Dispositif de stockage d'énergie entièrement immergé selon la revendication 1, dans lequel une extrémité de la pompe à eau (32) est équipée de manière fixe d'un tuyau d'arrivée d'eau (33), un déviateur (34) est monté de manière fixe à l'intérieur du boîtier (10) de dispositif de stockage d'énergie, et le tuyau d'arrivée d'eau (33) traverse le boîtier (10) de dispositif de stockage d'énergie et est assemblé de manière fixe au déviateur (34).

3. Dispositif de stockage d'énergie entièrement immergé selon la revendication 2, dans lequel un second moteur (35) est monté de manière fixe à l'intérieur du déviateur (34), une extrémité de sortie du second moteur (35) est reliée de manière fixe à une tige de vis (36), et la tige de vis (36) est équipée de manière mobile d'un recouvrement mobile (37),
dans lequel la tige de vis (36) et le recouvrement mobile (37) sont mis en prise de manière filetée, de telle sorte que lorsque le second moteur (35) est mis en marche pour entraîner la tige de vis (36) en rotation, le recouvrement mobile (37) se déplace vers le haut et vers le bas le long de la tige de vis (36).

4. Dispositif de stockage d'énergie entièrement immergé selon la revendication 3, dans lequel une extrémité d'un premier tuyau de dérivation (38) est reliée de manière fixe au déviateur (34), l'autre extrémité du premier tuyau de dérivation (38) est équipée de manière fixe d'une plaque de condensation (39), et des tuyaux de condensation (40) sont montés de manière fixe à l'intérieur de la plaque de condensation (39).

5. Dispositif de stockage d'énergie entièrement immergé selon la revendication 4, dans lequel la plaque de condensation (39) est équipée de manière fixe d'un tuyau de retour (41), et le tuyau de retour (41) est relié de manière fixe à un collecteur (42).

6. Dispositif de stockage d'énergie entièrement immergé selon la revendication 5, dans lequel une extrémité d'un second tuyau de dérivation (43) est reliée de manière fixe au déviateur (34), et l'autre extrémité du second tuyau de dérivation (43) est reliée de manière fixe au collecteur (42).

7. Dispositif de stockage d'énergie entièrement immergé selon la revendication 6, dans lequel le collecteur (42) est relié de manière fixe à un tuyau de sortie d'eau (44), et le tuyau de sortie d'eau (44) traverse le boîtier (10) de dispositif de stockage d'énergie.

8. Dispositif de stockage d'énergie entièrement immergé selon la revendication 7, comprenant en outre
trois engrenages supplémentaires, dont chacun s'engrène avec la crémaillère annulaire (14) par engrènement de dents et est relié à un arbre rotatif.

9. Procédé de commande d'un dispositif de stockage d'énergie entièrement immergé, qui est configuré pour commander un dispositif de stockage d'énergie entièrement immergé selon l'une quelconque des revendications 3 à 7, et le procédé comprend :
en réponse à un premier signal de commande, le démarrage du premier moteur (22) pour entraîner la rotation de l'engrenage (19), qui à son tour entraîne la rotation de la crémaillère annulaire (14) ; dans lequel une rotation de l'engrenage (19) entraîne le déplacement de la première tige d'assemblage (20) via l'arbre rotatif (18), la première tige d'assemblage (20) se déplace et forme un mouvement relatif avec la seconde tige d'assemblage (23), provoquant le déplacement vers le haut et vers le bas du boîtier (25) de stockage d'énergie ;
en réponse à un deuxième signal de commande, le pressage de la boucle (29) pour coopérer avec le ressort (28) afin d'ouvrir ou de fermer le boîtier (25) de stockage d'énergie ;
en réponse à un troisième signal de commande, le démarrage de la pompe à eau (32) pour introduire de l'eau dans le dispositif de stockage d'énergie entièrement immergé par le tuyau d'arrivée d'eau (33) ;
lorsqu'une température est supérieure à un premier seuil de température, en réponse à un quatrième signal de commande, démarrer le second moteur (35) pour entraîner la tige de vis (36) en rotation ; dans lequel, lorsque la tige de vis (36) tourne, le recouvrement mobile (37) est déplacé vers le sommet du second moteur (35) par l'intermédiaire d'un engagement fileté entre la tige de vis (36) et le recouvrement mobile (37) ;
lorsque la température est supérieure à un second seuil de température, en réponse à un cinquième signal de commande, le démarrage du second moteur (35) pour entraîner la tige de vis (36) en rotation ; dans lequel, lorsque la tige de vis (36) tourne, le recouvrement mobile (37) est déplacé vers la partie inférieure du second moteur (35) par l'intermédiaire de l'engagement fileté entre la tige de vis (36) et le recouvrement mobile (37) ; et le second seuil de température est supérieur au premier seuil de température.

10. Procédé de commande d'un dispositif de stockage d'énergie entièrement immergé selon la revendication 9, dans lequel le procédé comprend en outre :
en réponse à un sixième signal de commande, le démarrage de la pompe à eau (32) pour évacuer l'eau du dispositif de stockage d'énergie entièrement immergé par le tuyau de sortie d'eau (44).

11. Procédé de commande d'un dispositif de stockage d'énergie entièrement immergé selon la revendication 9, dans lequel le dispositif de stockage d'énergie entièrement immergé comprend en outre trois engrenages supplémentaires (19) ; et
le démarrage du premier moteur (22) en réponse au premier signal de commande pour entraîner l'engrenage (19) en rotation, ce qui entraîne à son tour la crémaillère annulaire (14) en rotation, comprend :
en réponse au premier signal de commande, le démarrage du premier moteur (22) pour entraîner l'engrenage (19) en rotation, ce qui entraîne à son tour la crémaillère annulaire (14) en rotation, dans lequel, lorsque la crémaillère annulaire (14) tourne, les trois engrenages supplémentaires (19) sont entraînés en rotation simultanément.
